# EUROPEAN PATENT APPLICATION

(11) **EP 4 700 708 A1**
(43) Date of publication of application: **25.02.2026**
(21) Application number: 25196907.7
(22) Date of filing: 20.08.2025
(51) Int. Cl.: G06T 13/60

(54) **IMAGE PROCESSING METHOD AND SYSTEM**

(30) Priority: 21.08.2024 GB 202412317
(71) Applicant: Sony Interactive Entertainment Inc., Tokyo 108-0075 (JP)
(72) Inventor: VILLANUEVA-BARREIRO, Marina, London, W1F 7LP (GB); SWANN, Andrew, London, W1F 7LP (GB); CRACIUN, Cristian, London, W1F 7LP (GB); PANESAR, Pritpal Singh, London, W1F 7LP (GB); NEDELCU, Radu-Andrei, London, W1F 7LP (GB); SUNDARAM, Chockalingam Ravi, London, W1F 7LP (GB); MOTILLA, Daniel Montero, London, W1F 7LP (GB)
(74) Representative: Fish & Richardson P.C.

(57) **Abstract**

There is provided an image processing method for generating images including a volumetric effect. The method comprises: sampling, using a 3D grid, computer-generated volumetric effect data for a virtual scene at a first sampling resolution, to obtain a first set of 3D sampling results; inputting the first set of 3D sampling results to a machine learning model trained to upscale at least part of input 3D sampling results; upscaling, by the machine learning model, at least part of the first set of 3D sampling results, to obtain a second set of 3D sampling results having a second, higher, sampling resolution; and generating one or more display images for the virtual scene at least partly in dependence on the second set of 3D sampling results

## Description

### BACKGROUND OF THE INVENTION

### Field of the invention

The present invention relates to an image processing method and system.

### Description of the Prior Art

Video graphics applications, such as in video games, TV shows, and movies, sometimes use volumetric effects to model smoke, fog, or other fluid or particle interactions such as the flow of water or sand, or an avalanche or rockslide, or fire.

Typically such volumetric effects are part of a complex rendering pipeline, being potentially responsive to the topology of the rendered environment, the textures / colours of that environment, and the lighting of that environment, as well as the properties of the volumetric material itself. These factors are then combined within the calculation for the volume of the effect, and this can result in a significant computational cost to the system. In practice this computational cost can result in either slow production of a TV show or film, or in adversely reducing the frame rate in a live generation of a video game.

One solution to this problem is to model the volumetric effect at a much lower resolution than the rendered image, to reduce the computational overhead, and then blend the results generated for a number of frames (e.g. ten) to smooth out the results - which would otherwise be blocky and discontinuous between calculations and hence appear to flicker. However, this sacrifices temporal resolution in order to recover an illusion of spatial resolution.

More generally, rendering of volumetric effects can potentially require burdensome processing. For interactive applications, such as video game applications and other similar applications, the associated time and processing constraints can present difficulties in rendering volumetric effects with acceptable quality.

The present invention seeks to mitigate or alleviate these problems.

### SUMMARY OF THE INVENTION

Various aspects and features of the present invention are defined in the appended claims and within the text of the accompanying description and include at least:
- In a first aspect, an image processing method is provided in accordance with claim 1.
- In another aspect, an image processing system is provided in accordance with claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram illustrating an example of an entertainment device;
- Figure 2a is a schematic diagram illustrating an example of a method for rendering images;
- Figure 2b is a schematic diagram illustrating an example of a method for rendering a volumetric effect;
- Figure 3 is a schematic diagram illustrating an image processing apparatus in accordance with embodiments of the disclosure;
- Figure 4 is a schematic diagram illustrating an image processing method in accordance with embodiments of the disclosure;
- Figure 5 is a schematic diagram illustrating an example of a view frustum voxel grid;
- Figure 6a is a schematic diagram illustrating an example of a machine learning model;
- Figure 6b is a schematic diagram illustrating a further example of a machine learning model; and
- Figure 7 is a schematic diagram illustrating an example of method for training machine learning models.

### DESCRIPTION OF THE EMBODIMENTS

An image processing method and system are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, a suitable system and/or platform for implementing the methods and techniques herein may be an entertainment device.

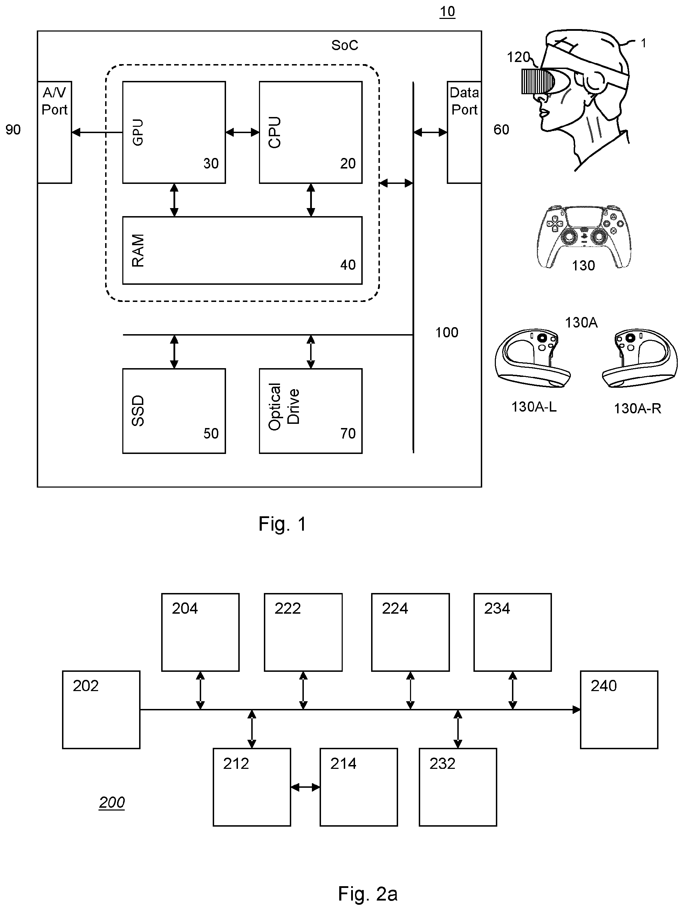

Referring now to the drawings, wherein like reference numerals designate identical or corresponding parts, Figure 1 shows an example of an entertainment device 10 which may be a computer or video game console, for example.

The entertainment device 10 comprises a central processor 20. The central processor 20 may be a single or multi core processor. The entertainment device also comprises a graphical processing unit or GPU 30. The GPU can be physically separate to the CPU, or integrated with the CPU as a system on a chip (SoC).

The GPU, optionally in conjunction with the CPU, may process data and generate video images (image data) and optionally audio for output via an AV output. Optionally, the audio may be generated in conjunction with or instead by an audio processor (not shown).

The video and optionally the audio may be presented to a television or other similar device. Where supported by the television, the video may be stereoscopic. The audio may be presented to a home cinema system in one of a number of formats such as stereo, 5.1 surround sound or 7.1 surround sound. Video and audio may likewise be presented to a head mounted display unit 120 worn by a user 1.

The entertainment device also comprises RAM 40, and may have separate RAM for each of the CPU and GPU, and/or may have shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment device is the head mounted display 'HMD' 120 worn by the user 1. The images output by the entertainment device may be displayed using various other devices - e.g. using a conventional television display connected to A/V ports 90.

Where components are not integrated, they may be connected as appropriate either by a dedicated data link or via a bus 100.

Interaction with the device is typically provided using one or more handheld controllers 130, 130A and/or one or more VR controllers 130A-L,R in the case of the HMD. The user typically interacts with the system, and any content displayed by, or virtual environment rendered by the system, by providing inputs via the handheld controllers 130, 130A. For example, when playing a game, the user may navigate around the game virtual environment by providing inputs using the handheld controllers 130, 130A.

Embodiments of the present disclosure relate to use of a trained machine learning (ML) model. The machine learning model may be trained using various techniques, such as supervised learning and/or unsupervised learning.

In one or more example embodiments of the present disclosure, the machine learning model may be trained using supervised learning. Such a machine learning model may be referred to as a supervised (machine) learning model.

The supervised learning model is trained using labelled training data to learn a function that maps inputs (typically provided as feature vectors) to outputs (i.e. labels). The labelled training data comprises pairs of inputs and corresponding output labels. The output labels are typically provided by an operator to indicate the desired output for each input. The supervised learning model processes the training data to produce an inferred function that can be used to map new (i.e. unseen) inputs to a label.

The input data (during training and/or inference) may comprise various types of data, such as numerical values, images, video, text, or audio. Raw input data may be pre-processed to obtain an appropriate feature vector used as input to the model - for example, features of an image or audio input may be extracted to obtain a corresponding feature vector. It will be appreciated that the type of input data and techniques for pre-processing of the data (if required) may be selected based on the specific task the supervised learning model is used for.

Once prepared, the labelled training data set is used to train the supervised learning model. During training the model adjusts its internal parameters (e.g. weights) so as to optimize (e.g. minimize) an error function, aiming to minimize the discrepancy between the model's predicted outputs and the labels provided as part of the training data. In some cases, the error function may include a regularization penalty to reduce overfitting of the model to the training data set.

The supervised learning model may use one or more machine learning algorithms in order to learn a mapping between its inputs and outputs. Example suitable learning algorithms include linear regression, logistic regression, artificial neural networks, decision trees, support vector machines (SVM), random forests, and the K-nearest neighbour algorithm.

Once trained, the supervised learning model may be used for inference - i.e. for predicting outputs for previously unseen input data. The supervised learning model may perform classification and/or regression tasks. In a classification task, the supervised learning model predicts discrete class labels for input data, and/or assigns the input data into predetermined categories. In a regression task, the supervised learning model predicts labels that are continuous values.

In some cases, limited amounts of labelled data may be available for training of the model (e.g. because labelling of the data is expensive or impractical). In such cases, the supervised learning model may be extended to further use unlabelled data and/or to generate labelled data.

Considering using unlabelled data, the training data may comprise both labelled and unlabelled training data, and semi-supervised learning may be used to learn a mapping between the model's inputs and outputs. For example, a graph-based method such as Laplacian regularization may be used to extend a SVM algorithm to Laplacian SVM in order to perform semi-supervised learning on the partially labelled training data.

Considering generating labelled data, an active learning model may be used in which the model actively queries an information source (such as a user, or operator) to label data points with the desired outputs. Labels are typically requested for only a subset of the training data set thus reducing the amount of labelling required as compared to fully supervised learning. The model may choose the examples for which labels are requested - for example, the model may request labels for data points that would most change the current model, or that would most reduce the model's generalization error. Semi-supervised learning algorithms may then be used to train the model based on the partially labelled data set.

Referring back to Figure 1, this figure provides an example of a data processing apparatus suitable for executing an application such as a video game and generating images for the video game for display. Images may be output via a display device such as a television or other similar monitor and/or an HMD (e.g. HMD 120). More generally, user inputs can be received by the data processing apparatus and an instance of a video game can be executed accordingly with images being rendered for display to the user.

Rendering operations are typically performed by rendering circuitry (e.g. GPU and/or CPU) as part of an execution of an application such as computer games or other similar applications to render image frames for display. Rendering operations typically comprise processing of model data or other predefined graphical data to render data for display as an image frame.

A rendering process performed for a given image frame may comprise a number of rendering passes for obtaining different rendering effects for the rendered image frame. Examples of rendering passes for rendering a scene may include rendering a shadow map, rendering opaque geometries, rendering transparent geometries, rendering deferred lighting, rendering depth-of-field effects, anti-aliasing, rendering ambient occlusions, and scaling among others.

Figure 2a schematically illustrates an example method of rendering images for display using a rendering pipeline 200. An entertainment device such as that discussed with respect to Figure 1 may for example implement such a rendering pipeline. The rendering pipeline 200 takes data 202 regarding what is visible in a scene and if necessary performs a so-called z-cull 204 to remove unnecessary elements. Initial texture/material and light map data are assembled 212, and static shadows 214 are computed as needed. Dynamic shadows 222 are then computed. Reflections 224 are then also computed.

At this point, there is a basic representation of the scene, and additional elements 232 can be included such as translucency effects, and/or volumetric effects such as those discussed herein. Then any postprocessing 234 such as tone mapping, depth of field, or camera effects can be applied, to produce the final rendered frame 240.

For generating volumetric effects, rendering pipeline techniques may use a volumetric simulation stage followed by a stage of sampling that samples the volumetric simulation. Rendering of volumetric effects, such as fog, smoke, steam, fire and so on typically require volumetric rendering approaches. The use of volumetric rendering for a scene may be desired for various reasons. However, rendering of scenes with realistic volumetric effects can be computationally expensive.

For convenience, the description herein may refer to 'fog' as a shorthand example of a volumetric effect, but it will be appreciated that the disclosure and techniques herein are not limited to fog, and may comprise for example other volumetric physical simulations, such as those of smoke, water, sand and other particulates such as in an avalanche or landslide, and fire.

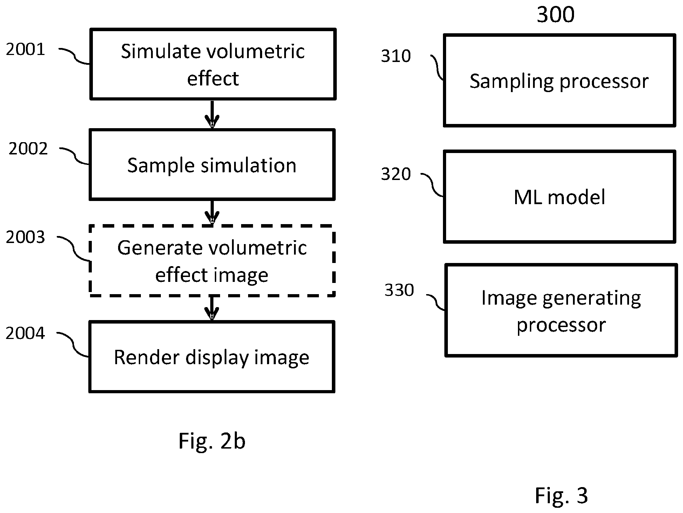

Figure 2b schematically illustrates an example method for rendering images with a volumetric effect, such as a volumetric fog effect. The method comprises: performing (at step 2001) a volumetric simulation (e.g. volumetric fog simulation); performing sampling calculations (at a step 2002) to sample the volumetric simulation and obtain a set of sampling results (e.g. stored as a 3D texture); generating (at a step 2003) a 2D volumetric effect image (also referred to herein as a 'volumetric effect map' or 'fog map') based on the sampling results, e.g. by projecting the sampling results onto a 2D image plane for a virtual camera viewpoint; and rendering (at a step 2004) display images to include a volumetric effect based on the 2D volumetric effect image. The step 2004 may comprise various render passes for providing various rendering effects, in which a volumetric effect rendering pass (e.g. volumetric fog rendering pass) can be used. In some cases, the step 2003 may be omitted and the step 2004 may comprise rendering display images directly based on the sampling results obtained at step 2002.

The volumetric simulation may use any suitable algorithm. For example, fog particles may be simulated or instead a density of fog may be simulated. Interaction of light with the fog can be modelled (e.g. transmission, absorption and scattering of light). The volumetric simulation may be performed only for a portion of a scene that is visible (e.g. a portion of a game world currently within a field of view of a virtual camera). The sampling calculation then samples the volumetric dataset with the results being stored, for example as a 3D texture. The sampling results are then optionally transformed (e.g. via a projection) into a 2D volumetric effect image; this provides an intermediate masked representation of the fog in the scene (i.e. where the fog is present in the scene and at what intensity). Rendering operations can thus be performed to render one or more display images, in which the rendering operations use the results of the sampling and the display images depict the scene with a volumetric effect (e.g. volumetric fog effect).

The sampling at step 2002 may comprise sampling the volumetric simulation using a low resolution froxel grid (i.e. sampling the volumetric simulation at a low sampling resolution).

As used herein, the term "froxel" connotes a view frustrum voxel (i.e. frustrum-voxel). A froxel grid may comprise frustrum voxels aligned with a virtual camera viewpoint. For instance, a froxel grid may comprise a three dimensional grid of voxels that is warped to map into a virtual camera frustum (i.e. a 3D grid of froxels). Hence the warp acts to convert a rectangular box of voxels into a truncated pyramid of similarly warped voxels fitting within the virtual camera frustum (i.e. froxels). It will be appreciated that in practice there is no warping step per se; simply that is the shape assumed for the froxel grid for the purposes of rendering calculations.

A low resolution froxel grid uses relatively large voxels, whereas a high resolution grid uses relative small froxels. 'Large' and 'small' in this case can depend on the computational budget available to the process of rendering the volumetric effect. However, typically the grid can be assumed to be 2, 4, 8, 16, 32, 64, or more times lower in resolution than the final rendered image, taking account of the effective size of the grid as a function of distance in the frustum. For example, a froxel grid may have dimensions Height(H)xWidth(W)xDepth(D) dimensions of 64x64x128 (i.e. 2D slices each 64x64 with 128 slices along the depth axis), or 80x45x64 or 160x90x128 for a more typical 16:9 aspect ratio image. The shape of the frustum means that there is a better spatial resolution within the virtual world closer to the virtual camera position.

An issue with existing approaches is that the rendered volumetric effect (e.g. fog) is of low quality, with poor temporal coherence. For example, sampling a potentially high resolution simulated fog dataset (or calculating values for a specific point to represent a large froxel) can give rise to a blocky simulation and flickering from one frame to the next as the values change.

As noted previously herein, one solution is to blend low resolution samples with previous low resolution samples (e.g. blending in 90% of the samples from the previous low resolution sample set). This smooths the results but at the cost of temporal resolution, making the flow of the fog smeary and less clear.

Embodiments of the present disclosure relate to an image processing method that aims to at least partially alleviate these problems. This includes sampling computer-generated (e.g. via a simulation) volumetric effect (e.g. fog) data for a virtual scene using a three-dimensional (3D) grid (e.g. a froxel grid) at a first sampling resolution. At least part of the so obtained first set of 3D sampling results is then upscaled by inputting the sampling results into a machine learning model trained to upscale input 3D sampling results, to obtain a second, higher sampling resolution, set of sampling results. By generating display images using the upscaled second set of sampling results, the present disclosure allows generating display images with higher quality volumetric (e.g. fog effects). The techniques of the present disclosure can allow for integration with existing graphics processing pipelines to allow computationally efficient generation of output images with volumetric effects (e.g. fog effects).

By increasing the sampling resolution using upscaling, the present approach allows reducing intra-frame blockiness and also reducing flickering between frames as the values within the higher resolution representation of the 3D (e.g. froxel) grid are more locally representative of the volumetric simulation from frame to frame. This reduces or removes the need for averaging across frames.

In this way, the spatial and temporal resolution and fidelity of the fog can be improved, with comparatively little computational overhead as upscaling the sampling results using the trained machine learning model is more efficient than computing the simulation values directly at the higher resolution. The present approach therefore can therefore provide a significant improvement in fog effect quality at relatively low computational cost, thus providing an improved balance between display image quality and efficiency.

Accordingly, the present disclosure allows more efficiently generating one or more display images including a higher quality (e.g. higher resolution and improved temporal coherence) fog effect, or any other volumetric effect.

As used herein, the term "sampling resolution" relates to the number of samples, per virtual scene volume, taken when sampling the computer-generated (e.g. simulated) volumetric effect. When sampling using a 3D grid, the sampling resolution may therefore be defined as the number of samples in each of the height (H), width (W), and depth (D) directions, per unit of virtual scene volume. One set of samples having a higher sampling resolution than another set may therefore relate to the one set comprising more samples than the another set in a given volume of the virtual scene. For example, a higher resolution 3D froxel grid has a greater number of respective froxels for a same given 3D space such that froxels of a smaller size are used in the higher resolution sample set.

Figure 3 shows an example of an image processing apparatus 300 in accordance with one or more embodiments of the present disclosure.

The image processing apparatus 300 may be provided as part of a user device (such as the entertainment device of Figure 1) and/or as part of a server device. The image processing apparatus 300 may be implemented in a distributed manner using two or more respective processing devices that communicate via a wired and/or wireless communications link. The image processing apparatus 300 may be implemented as a special purpose hardware device or a general purpose hardware device operating under suitable software instruction. The image processing apparatus 300 may be implemented using any suitable combination of hardware and software.

The image processing apparatus 300 comprises a sampling processor 310, a machine learning (ML) model 320, and an image generating processor 330. The operations discussed in relation to the sampling processor 310, ML model 320 and image generating processor 330 may be implemented using the CPU 20 and/or GPU 30, for example. For instance, the ML model 320 may be deployed on the GPU 30.

The sampling processor 310 samples computer-generated volumetric effect data for a virtual scene using a 3D (e.g. froxel) grid at a first sampling resolution, to obtain a first set of 3D sampling results. The ML model 320 is trained to upscale at least part of input 3D sampling results to increase their sampling resolution. The first set of sampling results is input to the ML model 320 to obtain a second set of sampling results having a second, higher, sampling resolution. The image generating processor 330 then generates one or more display images for the virtual scene at least partly in dependence on the second set of sampling results.

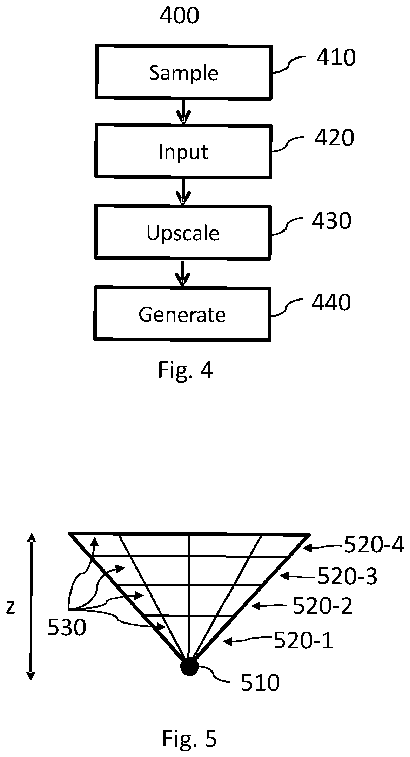

Figure 4 shows an example of an image processing method 400 in accordance with one or more embodiments of the present disclosure. The method 400 may be used to generate images with volumetric effect (e.g. fog) effects.

A step 410 comprises sampling computer-generated volumetric effect data for a virtual scene. The volumetric effect data is sampled using a 3D grid. The sampling performed at a first sampling resolution. A first set of sampling results is output at step 410.

The computer-generated volumetric effect data sampled at step 410 may have been generated using any suitable simulation algorithm. In some cases, the method 400 may further comprise generating the volumetric effect data. Alternatively or in addition, pre-generated volumetric effect data may be stored. For example, volumetric effect data may be generated in advance by another data processing apparatus and downloaded to the image processing apparatus 300. In some examples, volumetric effect data may be generated by another data processing apparatus and streamed (e.g. live streamed) to the image processing apparatus 300 for sampling thereof.

The volumetric effect data may be generated using any suitable simulation algorithm. In some cases, the volumetric effect data may be generated by a rendering pipeline for a video game or game engine. The Unreal ^{®} game engine is an example of a suitable game engine that can be used for simulating such volumetric effect data. The volumetric effect data can be simulated both spatially and temporally so that the volumetric effect data varies over time and sampling with respect to the volumetric effect data can be performed to sample the volumetric effect data at different points in time (e.g. from frame to frame). For example, in the case of a simulation of volumetric fog effect data, a 3D simulation of respective particles and/or fog density for a portion of a virtual scene within a field of view of a virtual camera may be calculated at various times.

The volumetric effect data may relate to a volumetric effect such as one or more of: a volumetric fog effect, volumetric smoke effect, volumetric water effect, a volumetric fire effect, and/or a volumetric mobile particles effect (e.g. sand, or avalanches, etc.). The first set of samples obtained at step 410 may therefore represent one or more of fog, smoke, water, fire, and/or mobile particles.

As noted above, step 410 comprises sampling the volumetric effect data (e.g. volumetric fog effect data) to obtain a set of sampling results. The sampling is performed using a 3D grid. Sampling using the 3D grid may comprise performing a 3D sampling calculation for sampling the volumetric effect data. Generally, the 3D volumetric effect data is sampled using a 3D sampling scheme to obtain a set of 3D sampling results.

The volumetric effect data may be sampled according to a frame rate to periodically obtain a set of sample results for the volumetric effect data. For example, each sample of the 3D grid may be updated every frame. Alternatively, the samples may be updated less frequently, such as every two or more frames, to reduce computational costs.

The 3D grid used for the sampling may comprise a frustrum voxel grid (i.e. a froxel grid) comprising frustrum voxels (i.e. froxels).

Figure 5 schematically illustrates an example of a plan view of a froxel grid.

The 3D froxel grid comprises frustum voxels which fit within the view frustum of the virtual camera, as shown in Figure 5. In the example shown, the froxels 530 are aligned with a virtual camera viewpoint 510 for a virtual scene. The froxels 530 each define a cell of the froxel grid. The use of such a froxel grid can be beneficial in that frustum-shaped voxels contribute to achieving better spatial resolution for part of a virtual scene closer to the virtual camera position. Sampling using a froxel grid therefore allows improving the efficiency of the sampling process as fewer samples are taken with increasing distance from the virtual camera position.

The example in Figure 5 shows a view frustum voxel grid including four depth slices 520 in the depth (z) axis for purposes of explanation. In practice, the volumetric effect data may for example be sampled using a froxel grid having dimensions of 64x64x128 (i.e. 2D slices each of 64x64 with 128 slices along the depth axis (i.e. 128 depth slices)), or 80x45x64 or 160x90x128 for a more typical 16:9 aspect ratio image.

Alternatively to a froxel grid, the 3D grid used for sampling at step 410 may comprise a voxel grid with voxels of a uniform shape and volume. A voxel grid may for example be used when the volumetric effect data is sampled once for use in a plurality of display images each having a different virtual camera viewpoint. In such cases, using voxels with uniform shapes allows generating display images with high quality fog effects from a range of virtual camera viewpoints.

Hence, step 410 comprises sampling the volumetric effect data to obtain a 3D first set of sampling results having a first sampling resolution. The set of sampling results may be stored as a 3D array (e.g. HxWxD) for which each entry may be indicative of at least a grayscale value or colour value (e.g. in RGB format). Hence, in some examples a respective sample of the set of sampling results may specify a colour value. For example, for a simulation of a volumetric fog, the sampling may result in obtaining a set of sampling results indicative of colours that are generally white (e.g. grey, off-white and so on) for respective froxels (or voxels). In some embodiments of the disclosure, the sampling may obtain sampling results indicative of both colour and transparency (e.g. a respective sample result may be indicative of an RGBA value, where A is an alpha value between 1 and 0 for indicating transparency).

The first sampling resolution may be relatively low due to factors such as computation cost and/or processing time constraints. For example, whilst sampling using a 640x390x128 3D grid may be desirable, a data size of approximately 250 MB for the resulting samples and the computational overhead associated with such a sampling calculation can be prohibitive and therefore much lower sampling resolutions (e.g. 64x64x128) may typically be used. As a consequence of this, if the first set of sampling results were to be used directly for generating display images, the volumetric effect rendered in this way may be of low quality with poor temporal coherence.

Steps 420-430 comprise upscaling at least part (e.g. some or all) of the first set of sampling results.

A step 420 comprises inputting the first set of sampling results to a ML model (e.g. the ML model 320) trained to upscale at least part of input 3D sampling results to increase their sampling resolution.

The first set of 3D sampling results, e.g. in the form of a froxel or voxel grid, may be input to the ML model as an input matrix. The input matrix may be considered an image matrix representing data for each element of the 3D grid (e.g. froxel grid) used to sample the volumetric effect data. To upscale the input matrix, the ML model may use a convolution that slides a NxN kernel across the input matrix.

The ML model may comprise one or more Convolutional Neural Networks (CNNs), Generative Adversarial Networks (GANs), and/or Autoencoders. For instance, the ML model may comprise one or more of: a vision transformer based model (e.g. a Hybrid Attention Transformer (HAN) model), a GAN-based model (e.g. A-ESRGAN, or TecoGAN), and/or a sequential based model (e.g. a Recurrent Neural Network (RNN)). In an example, the ML model comprises an A-ESRGAN model. In another example, the ML model comprises a RNN model.

The input matrix may be two- or three-dimensional. In cases where the input matrix is 2D and the ML model processes the input sampling results in 2D, the sampling results may be divided into a plurality of 2D slices for input to the ML model. Each 2D slice may have dimensions of HxWx1 for grayscale samples, HxWx3 for RGB samples, or HxWx4 for RGBA samples. The ML model may then perform upscaling separately for each 2D slice. For example, at step 420, the first sample set may be divided into a plurality of slices along a first direction (e.g. the depth, z, direction). Referring back to Figure 5, for example, the froxel grid may be divided into a plurality of depth slices 520-1, 520-2, 520-3, and 520-4. The ML model may then perform upscaling for the sampling results for each 2D depth slice 520 of the froxel grid to increase the resolution for each 2D depth slice. The resulting upscaled depth slices can then be combined back into a second set of sampling results output at step 430 that can in turn then be used to generate display images as described below with reference to step 440.

For improved efficiency, inputting the sampling results to the ML model may comprise performing one or more linear algebra operations on the sampling results. The linear algebra operations may comprise transposing the input matrix, and/or flattening the input matrix.

Considering transposing, the input sampling results may be transposed such that depths are input to the ML model as channels of the input matrix. The ML model typically receives data in a standard format such as (Height, Width, Depth, Channels). The Channels may for example comprise four channels for a RGBA sample. The sampling results are likewise structured in a given format, such as (Height, Width, Depth, Channels) for samples of a froxel or voxel grid. The transposing of the sampling results may comprise swapping the Channels and Depth dimensions of the sampling results. For example, for a given sample height and width, samples in a depth direction may be input to the ML model as channels of the input matrix. In other words, a plurality of samples of the input sampling results at a first width and a first height but having a plurality of different depths may be input as a single sample with channels corresponding to each of the different depths. Referring back to Figure 5, for instance, the froxel samples 530 may be 'rolled into' a single sample with each of the original samples at different depths being set as channels of the single sample.

Transposing the input sampling results in this way allows improving the efficiency of upscaling the sampling results. Inputting the depths of the initial sampling results to the ML model as channels removes the need to process each depth-slice separately, while allowing the use of ML models trained for 2D upscaling. This approach therefore allows reducing the number of multiply-accumulate (MAC) operations per sampling results frame. In some cases, a single set of ML model weights may be used to upscale an entire input set of sampling results.

Following the transposing as described herein, the input sampling results may be divided into a plurality of slices for each channel, in a similar way to that described above in relation to depth slices. It will be appreciated that the 3D sampling results typically comprise more depths (e.g. 128) than channels (e.g. 1, 3, or 4). Accordingly, the transposing allows reducing the number of slices that need to be processed by the ML model, thus improving the efficiency of the upscaling process. For grayscale samples comprising only one channel, no division into slices may be required at all.

Alternatively, to yet further improve efficiency, following the transposing, the input sampling results may be flattened. For sampling results comprising a plurality of channels (e.g. RGBA channels), the sampling results may be flattened such that data in the initial Width, Height, and Channel dimensions is unravelled into two dimensions. In this way, a 2D input matrix (representing the Width, Height, and Channel dimensions of the sampling results) with a plurality of channels (representing the Depth dimension of the sampling results) may be obtained for input to the ML model. That is, for RGBA sampling results, the input matrix may have the form 4Hx4WxD (e.g. D = 128). Hence each slice is effectively structured as a 4Hx4W slice with 128 channels (thus creating input stacks). Using the depth-slicing approach, 128 individual sets of ML model weights would have been needed for the different depths. In contrast, by transposing and flattening the input as described herein, a single set of ML model weights may be used to upscale the 3D input sampling results (e.g. a full froxel grid).

Operating on the input matrix as described herein (e.g. by transposing and/or flattening the input matrix) allows using ML models trained for 2D super-resolution which can be more efficient than 3D upsampling models, while reducing the number of times the input data needs to be processed by the ML model, thus reducing the computational costs and improving efficiency.

Alternatively, the ML model may be trained to process 3D input data directly, without requiring the dividing of the data into slices. For example, a 3D CNN may be used to process the input 3D sampling results directly to increase their sampling resolution.

The ML model is trained to upscale the input sampling results to output higher sampling resolution results. The ML model may be trained to map a set of lower resolution 3D sampling results to a set of higher resolution 3D sampling results. The ML model may be trained using training data comprising pairs of lower resolution and higher resolution sets of 3D sampling results to learn a set of parameters for mapping a set of lower resolution 3D sampling results to a set of higher resolution 3D sampling results. The higher resolution sets of 3D sampling results may be used as ground truth data. Such training data may, for example, be obtained by running a rendering pipeline and sampling using a first sampling resolution and then re-running the rendering pipeline with the difference being that a second sampling resolution is instead used. In this way, a voxel grid (or froxel grid) with a first sampling resolution can be used to obtain a first set of 3D sampling results and another voxel grid (or froxel grid) with greater spatial resolution can be used to obtain a second set of 3D sampling results with a higher spatial resolution. In other words, the sampling at step 410 may be performed at two different sampling resolutions to obtain pairs of lower and higher resolution sets of 3D sampling results.

In some examples, an existing rendering pipeline for a game engine may be used to obtain the training data comprising the pairs of lower resolution and higher resolution sets of 3D sampling results. As explained above, some existing rendering pipelines may blend sampling results for one or more (e.g. ten) previous frames with the sampling results for a given frame and this may sometimes present difficulties in accessing a set of sampling results for a respective frame. Hence, in some cases the rendering pipeline can be run and a game state can be frozen (locked) for a period of time whilst frame rendering continues. In this way, the rendering proceeds to repeatedly render image frames for the same game state (deterministically) and the voxel grid (or froxel grid) sampling is repeated for each frame so that the obtained sampling results are the same (or substantially the same) and the temporal blending effect can be removed.

It will be appreciated that the training data may be generated separately to subsequent training of a machine learning model using that training data.

It will also be appreciated that the training data is structured in the same way as the data input to the ML model at step 420. For instance, in examples where the sampling results are pre-processed using linear algebra operations (e.g. transposed and/or flattened as described herein), the training data may be structured in a corresponding manner.

The ML model may be trained using techniques appropriate for the type of ML model used, these techniques may include supervised or unsupervised learning. For example, in cases where the ML model comprises an RNN, the RNN may be trained using back propagation through time (BPTT).

The ML model may be trained on the basis of a supervision signal. For example, a supervision signal relating to a loss/cost function may be determined to optimise the parameters of the ML model during training. The supervision signal for training the ML model may be evaluated in the 3D grid (e.g. froxel) space and/or in the 2D image space.

Considering a 3D grid space supervision signal, the ML model may be trained by evaluating an upscaled set of sampling results for a volumetric effect output by the ML model against a ground truth set of sampling results for the volumetric effect. For example, for training data comprising pairs of lower and higher resolution sampling results, the low resolution sampling results may be input to the ML model for upscaling and the resulting upscaled sampling results may be evaluated against the corresponding higher resolution sampling results to assess the quality of the upscaling via one or more appropriate loss functions. Using a supervision signal in the 3D grid space (e.g. a supervision signal in the froxel space) allows training the ML model in an efficient manner as the supervision signal can be computed directly from the output of the ML model and the ground truth higher resolution sampling results.

Considering a 2D image space supervisions signal, the ML model may be trained by evaluating a display image generated using an upscaled set of sampling results for a volumetric effect output by the machine learning model against a display image generated using a ground truth set of sampling results for the volumetric effect. Thus, each of the upscaled sampling results output by the ML model and the ground truth higher resolution sampling results may be used to generate one or more corresponding display images (e.g. for the same one or more scenes), and the respective display images may then be compared to assess performance of the ML model. The display images may for example be generated by inputting the respective sampling results into a rendering pipeline.

Alternatively to generating the ground truth display images based on ground truth sampling results, the display image generated using the upscaled set of sampling results for a volumetric effect output by the machine learning model may be evaluated against a corresponding ground truth display image including the volumetric effect (e.g. a ground truth image of a foggy mountain).

In the image supervision signal approach, the quality of the super-resolution output of the ML model can be evaluated in the same space (i.e. the 2D image space) as the images output to the user. This provides improved accuracy of the ML model and of images generated based on output of the ML model, as human perception of the output images can be more accurately tracked. For instance, some artefacts introduced by the upscaling process may be only, or better, visible in the image space while not appearing in the grid/froxel space. Thus, by determining loss functions for training of the ML model in the image space, such artefacts can be accounted for and the ML model can be trained to avoid such artefacts.

Only one of the 3D grid and 2D image supervision signals may be used. Alternatively, for further improved accuracy of the ML model, supervision signals in both domains may be used at training.

As noted above, training of the ML model may comprise determining one or more loss functions in dependence on the output of the ML model and ground truth data. The loss functions used may depend on the type of ML model used. The loss functions may comprise one or more of: pixel (or voxel) loss functions such as Mean Square Error or Charbonnier loss, perceptual loss functions, and/or adversarial loss functions. The loss functions may be determined in the 3D grid and/or 2D image space as described above.

In one or more examples, an ML model such as A-ESRGAN or RNN may be trained at least in part using a perceptual loss function. For instance, the perceptual loss may be determined using a pre-trained Learned Perceptual Image Patch Similarity (LPIPS) or Visual Geometry Group (VGG) model. For example, the higher resolution sampling results output by the ML model (and/or display images generated therefrom) and the ground truth sampling results (and/or display images generated therefrom) may each be passed through a VGG model and their activations may be compared at one or more intermediate layers.

Alternatively, the perceptual loss may be determined using a dedicated 'fog perception' ML model trained for assessing human perception of volumetric effects. The fog perception ML model may be trained using pairs of 3D volumetric effect sampling results and quality scores for display images generated using the 3D volumetric effect sampling results. The quality scores may be determined automatically (e.g. using a suitable image processing technique), or manually by one or more operators. For example, operator scores for volumetric effect quality may be obtained (e.g. from test users) for images generated based on a plurality of sampling result sets of different resolutions. The fog perception ML model may then be trained to identify features of the sampling results that are salient for the human perception of the volumetric effect in the output images. During training of the upscaling ML model (e.g. ML model 320), the fog perception ML model may then be used to extract features of both the upscaled sampling results and the ground truth high resolution sampling results. These extracted features may then be compared to determine a perception loss for use in training of the upscaling ML model. It will be appreciated that the fog perception ML model may be used for fog or any other type of volumetric effect, the term 'fog' is only used as for shorthand notation.

Advantageously, determining the perception loss using a specifically-trained fog perception model allows more closely matching human perception of volumetric effects, and improving the level of detail (LOD) of the volumetric effect in the upscaled sampling results. In this way, display images with higher quality volumetric effects can be generated at step 440.

A step 430 comprises upscaling, by the trained ML model, at least part of the first set of sampling results.

The upscaling is performed by predicting values of new samples, thus increasing the total number of samples and the sampling resolution. In this way, a second set of sampling results is obtained, which second set has a second sampling resolution that is higher than the first sampling resolution. Upscaling using the trained ML model is more computationally efficient than sampling the fog at higher resolution and therefore provides a more efficient way to obtain high quality fog effects in display images.

The higher resolution second sample set has increased sampling resolution relative to the first sample set and can be used to provide a higher quality fog effect relative to that achieved using the initial first sample set. Rather than using a high resolution sampling for sampling the computer-generated volumetric effect data and generating a high resolution sample set (which is one possibility), the method 400 allows sampling using a lower resolution and using upscaling at step 420 to generate a higher resolution sample set so as to effectively allow recovery of information. For example, whereas the initial first sample set may have a sampling resolution of 64x64x128, the higher resolution second sample set may have a sampling resolution of 256x256x128 (e.g. 4x upsampling in the spatial dimensions of height and width, with the depth dimensions unchanged) or 256x256x512 (e.g. 4x upsampling in each of H, W, and D dimensions).

The upscaling at step 430 is performed in 3D (e.g. froxel) space, where a 3D first set of sampling results is upscaled to a 3D second set of sampling results. In this way, 3D information about the volumetric effect (e.g. fog) is retained in the upscaling process, e.g. ensuring that a new fog sample created by upscaling is determined based on fog samples that are actually adjacent in 3D space. The present 3D approach therefore contrasts with existing image upscaling approaches in which upscaling is performed in 2D pixel space as a result of which new pixels can be 'hallucinated' (e.g. a new pixel may be added based on neighbouring pixels that relate to objects at entirely different depths). The present 3D upscaling approach therefore provides improved volumetric effect (e.g. fog) quality.

Upscaling the first sample set may comprise upsampling the first set and/or performing super resolution processing on the first sample set. Upscaling may be performed for each RGB colour channel in the first sample set. Alternatively, only a subset of the colour channels may be upscaled.

At least part of the first set of sampling results is upscaled at step 430. In some cases, the at least part of the first set may comprise all of the first sample set, such that the sample resolution is increased across samples in the first set.

Alternatively, only a subset (e.g. one or more portions/regions) of the first set may be upscaled at step 430. For example, upscaling may be performed to upscale a first portion of the first set of sample results whilst not performing upscaling for a second portion (or performing upscaling for the second portion with a lower upscaling factor - e.g. 2x upsampling (i.e. resolution increase) for one portion and 4x upsampling for another portion). Hence, whilst the first set of sample results may have a uniform sampling resolution, the upscaled second set of sample results may comprise at least a first sample portion with a first sampling resolution (e.g. X samples per unit volume) and a second sample portion with a second sampling resolution (e.g. Y samples per unit volume) where X and Y are different. For example, the first sample portion may have been upscaled by a factor of N relative to the corresponding sample portion in the first sample set (e.g. N may be a value of 2, 4 or 10 for example), and the second sample portion may not have been upscaled and may have a same sampling resolution as the corresponding sample portion in the first sample set.

The second set of sampling results may therefore comprise a first sample portion having a first sampling resolution and a second sample portion having a second sampling resolution different from the first sampling resolution. More generally, the second sample set output at step 430 may comprise a plurality of sample portions having a plurality of different sampling resolutions.

In some cases, upscaling the first set of sampling results may comprise upscaling different portions of the first sample set to different extents. For example, the machine learning model may selectively upscale one or more samples of the first sampling results such that the second set of sampling results is upscaled to different extents in different parts. For instance, a first portion of the first sample set may be upscaled to increase its resolution by a first factor (e.g. 2), and a second portion of the first sample set may be upscaled to increase its resolution by a second higher factor (e.g. 4).

In some cases, different ML models may be used to upscale different portions of the first sample set. For example, a RNN model may be used to upscale a first portion of the first sample set, and an A-ESRGAN model may be used to upscale a second portion of the first sample set. The different portions may be upscaled to the same target sampling resolution; however, by using different interpolation techniques different amounts of computational resources are applied to the upscaling of different regions thereby further improving efficiency. For example, a more computationally intensive ML model may be used for a more salient portion of the first sample set (where the saliency may be determined using the approaches for selecting samples for upscaling as discussed below) and a less computationally intensive ML model may be used for less salient portions of the first sample set. Alternatively, the different portions may be upscaled to different target sampling resolutions.

In some cases, the ML model may target (i.e. select) one or more samples of the first set of sampling results for upscaling.

The ML model may be trained to select one or more (e.g. a subset of) samples from the first set of sampling results for the at least part of the first set of sampling results for upscaling at step 430. In other words, step 430 may comprise the ML model selecting one or more portions of the first sample set and increasing sampling resolution for the one or more selected portions. It will be appreciated that selecting a given sample for upscaling connotes that one or more new samples are predicted (e.g. interpolated) in the vicinity of the given selected sample. Likewise, it will be appreciated that samples that are not selected may not be upscaled, or may be upscaled to a lesser extent than selected samples (e.g. to a lower target sampling resolution, or using a computationally simpler ML model).

When a sample is selected for upscaling, upscaling may be performed for a region of one or more samples around the selected sample, to provide a smoother transition between higher and lower resolution sample regions in the sample set. For example, a 5x5x5 or 7x7x7 region of samples around a selected sample may be upscaled.

The ML model may learn one or more rules for selecting the one or more samples. For example, the ML model may learn which samples are most salient to the user's perception of the volumetric effect based on training data comprising sample sets and operator scoring of resulting images comprising the volumetric effect. Thus, the ML model may be trained to identify salient portions of a sample set for upscaling. Alternatively, the rules for selecting samples for upscaling may be determined empirically and predefined.

Selecting a subset of the samples for upscaling allows prioritising the upscaling of regions of the 3D sample space that are more salient to the user's perception of the volumetric effect, and improving the efficiency of the upscaling process.

The ML model may select samples for upscaling in dependence on various parameters. For instance, one or more properties associated with samples in the first sample set may be used to select the subset of samples for upscaling. The subset of samples may be selected in dependence on guiding data comprising one or more of: a display image of the virtual scene, a depth image of the virtual scene, game state data, and a mesh of one or more objects in the virtual scene.

In some cases, the ML model may select the subset of samples for upscaling in dependence on a position of the sample relative to a virtual camera viewpoint.

For example, the ML model may select a sample for upscaling in dependence on a distance of the sample from a virtual camera viewpoint in the 3D virtual scene. For instance, the ML model may learn to select samples within a threshold distance (in 3D space) from the virtual camera viewpoint; while other samples may not be upscaled or may be upscaled to a lesser degree (e.g. their resolution being increased by a lower factor). The threshold distance may be learned by the ML model during training; alternatively, the threshold distance may be predetermined, e.g. empirically. This approach allows prioritising the allocation of computing resources to the upscaling of samples that are closer to the virtual camera and so are likely to be more noticeable to the user. Further, by considering sample distance from the virtual camera in 3D space, the present approach can provide a more natural transition from higher sampling resolution regions to lower resolution regions, as the higher sampling resolution regions are adjacent to one another in 3D space. Upscaling samples based on their distance from the virtual camera viewpoint in 3D space more closely mimics the biomechanics of the human eye with respect to focus points (whereby the human eye can selectively focus on objects at different depths), thereby allowing generating more realistic fog effects in the display images generated at step 440.

In some cases, the ML model may use a different threshold distance in different directions from the virtual camera. For example, a higher threshold distance may be defined for a central/normal direction from the virtual camera (i.e. normal to a 2D screen, see e.g. central line in z-direction in the froxel grid of Figure 5), and a lower threshold distance may be defined for directions away from the central direction (e.g. the threshold distance gradually decreasing as the angle between a direction and the central direction increases). In this way, upscaling of central (with respect to the display) samples that may be more noticeable to the user can be prioritised, providing improved balance between efficiency and fog effect quality.

In some cases, when selecting samples for upscaling based on their position relative to the virtual camera viewpoint, the ML model may consider the samples' position in one or more specific directions in the 3D space. This can provide a simplified approach for selecting samples. For example, samples within a threshold 2D distance from the virtual camera viewpoint, e.g. in the x-y (i.e. height and width) directions, may be selected for upscaling. Alternatively, or in addition, samples within a threshold 1D distance, e.g. in the z (depth) direction, may be selected for upscaling.

As noted above, each sample of the first set of samples may have a value indicative of both colour and transparency of the volumetric effect at a given region in 3D space (e.g. a respective sample's value may comprise an RGBA value, where A is an alpha value between 1 and 0 for indicating transparency). In some cases, the ML model may select samples for upscaling in dependence on the value of a given sample and of one or more further samples.

For example, the ML model may select a sample for upscaling in dependence on values of one or more samples between the virtual camera viewpoint and the sample (i.e. based on values of 'intervening' samples). In this way, samples may be selected in dependence on the extent to which they are hidden away by samples closer to the virtual camera. For example, when the volumetric effect comprises fog, samples behind thick fog may not be selected for upscaling as they are less likely to be noticeable to the user. This allows further improving the efficiency of the upscaling process, thus allowing providing higher quality volumetric effects in display images at lower computational cost.

In cases where samples are selected for upscaling if the distance between the sample and the virtual camera is below a threshold distance, the threshold distance may vary for different directions in dependence on values of intervening samples in each direction. For example, the threshold distance may increase with decreasing values of intervening samples in a given direction.

When selecting samples for upscaling, the values of intervening samples may for example be accounted for by summing the values of intervening samples for a given sample. The given sample may then be selected for upscaling if the sum of values of its intervening samples is below a threshold (which may be predetermined or learned by the ML model). A weighting may be applied to the intervening samples, such that values of samples closer to the virtual camera are assigned a higher weighting in the sum. Alternatively, or in addition, an average of values for the intervening samples may be calculated, and samples for which this average is below a threshold may be selected for upscaling.

Alternatively, or in addition, the ML model may select the subset of samples for upscaling in dependence on a position of the sample relative to (i.e. within) the volumetric effect sampled using the first sample set. For example, samples may be selected in dependence on whether they are adjacent to an edge of the volumetric effect or a region of the volumetric effect with a high level of detail (LOD). This allows taking into account the shape of the volumetric effect and where a given sample is within that overall shape, so as to identify samples that may be most noticeable to the user.

For example, samples adjacent an edge (i.e. boundary) of the volumetric effect may be targeted for upscaling. In this case, selecting a sample for upscaling may comprise selecting a sample in dependence on whether the sample is within a threshold distance from an edge of the volumetric effect. Differences in resolution of the edges of a volumetric effect (e.g. fog) may be most noticeable to the user; this approach therefore allows more efficiently allocating computing resources. Edges of the volumetric effect may be determined in dependence on values of the samples in the first sample set, to identify where the volumetric effect ends. Alternatively, or in addition, the ML model may learn to identify edges of the volumetric effect using computer vision techniques.

Alternatively, or in addition, a sample may be selected for upscaling in dependence on properties of the volumetric effect in the vicinity of the sample. For instance, the LOD of the volumetric effect may be determined in a plurality of sample regions based on the first set of samples, and samples in regions with a higher LOD (e.g. LOD exceeding a threshold) may be selected for upscaling.

Alternatively, or in addition, the ML model may select a sample for upscaling in dependence on a value of the sample and/or of one or more neighbouring samples. For instance, a sample may be selected for upscaling based on whether its value (e.g. RGB, and/or A value) is above a threshold. For example, only samples whose RGB value is above a threshold or whose A (i.e. transparency) value is below a further threshold may be selected for upscaling, and/or may be upscaled to a greater extent than other samples.

In some cases, some portions of the first sample set may be "empty" (i.e. do not include data for the volumetric effect), whereas other portions may include data for the volumetric effect. For example, the first sample set may include a volumetric effect in a lower portion of the 3D sample space (e.g. froxel values associated with volumetric fog) with no volumetric effect in an upper portion of the 3D sample space. For example, a low lying fog may be simulated and sampled. More generally, one or more first portions of the first sample set may comprise sample (e.g. froxel) values associated with a volumetric effect, whereas one or more second portions of the first sample set may comprise empty (i.e. null) sample values. The ML model may upscale the sampling resolution for the one or more first portions. The one or more second portions may be disregarded.

Hence more generally, in some embodiments of the disclosure, the sampling resolution for a given portion of the first sample set may be increased in dependence on whether the given portion includes data associated with the volumetric effect. For example, for a first portion including samples associated with a volumetric fog effect (e.g. froxel values indicative of at least colour and optionally transparency), the sampling resolution may be increased, whereas a second portion without samples associated with the volumetric fog effect (e.g. null sample values) may be ignored.

In some examples, detection of a given sample portion that includes samples associated with the volumetric effect may be performed using a predetermined block size (e.g. a block of MxMxM samples, such as 4x4x4 froxel blocks or 8x8x8 froxel blocks). The image may be segmented into a number of sample (e.g. froxel) blocks each of a same predetermined size. In response to detection of at least one sample in a sample block having samples associated with the volumetric effect, the sample block can be defined as an active sample block for selection for upscaling. In this way, a given sample portion comprising a plurality of sample blocks each having at least one non-null sample associated with the volumetric effect can be increased in sampling resolution. This can be useful in that parts of the first sample set including an edge of the volumetric effect (i.e. a boundary where the samples transition from the volumetric effect to null samples) can be increased in sampling resolution for providing detail for boundaries of the volumetric effect.

Alternatively, or in addition, the ML model may select the subset of the first set of sampling results for upscaling in dependence on positions of samples relative to virtual objects in the virtual scene. Selecting a sample for upscaling may comprise selecting a sample from the first set of sampling results in dependence on a position of the sample relative to one or more virtual objects in the virtual scene. For instance, samples within a threshold distance of virtual objects may be selected for upscaling. In this way, the sampling resolution may be increased for portions of the first sample set which are expected to correspond to portions of the display image generated at step 440 including one or more virtual objects in the virtual scene. Hence, the quality of the volumetric effect in the resulting display image can be enhanced for the image portion of the display image including the virtual object.

In some cases, the relevant virtual objects (relative to which the position of samples is assessed when selecting samples for upscaling) may be selected, e.g. based on a predefined selection by an operator, or based on one or more properties of the virtual objects. For example, for videogame content, virtual objects of higher importance to the gameplay (e.g. corresponding to an enemy boss) may be selected based on game state data, such that higher quality volumetric effects are obtained around these higher importance virtual objects which the user is more likely to pay attention to. Alternatively, or in addition, virtual objects having given properties (e.g. destructible objects, or objects of a given colour or brightness) may be selected.

The position of the virtual objects may for example be determined in dependence on one or more of: a previous display image of the virtual scene, a depth image of the virtual scene, a mesh of one or more virtual objects in the virtual scene, and/or game state data in cases where videogame content is rendered. The depth image and/or mesh of objects may be retrieved from a rendering pipeline (such as the pipeline 200). Game state data may for example be retrieved from a game engine for the videogame.

More generally, the display image, depth image, mesh, and game state data inputs may be input to the ML model as guiding data that serves to guide the upscaling step 430 to target one or more portions of the first sample set for increasing the sampling resolution thereof. For example, the depth image may be useful for indicating locations of edges for virtual objects in the virtual scene. Using the depth image, locations of virtual objects and/or surface boundaries for such objects can be identified and one or more portions of the first sample set can be targeted for upscaling for enhancing quality for these parts of the virtual scene in the resulting display image. A mesh of the objects (e.g. as generated in the rendering pipeline prior to shading) may likewise be used to identify virtual objects and their boundaries in the virtual scene.

Alternatively or in addition to using a depth image, a display image for the virtual scene may be used to select samples for upscaling. In particular, a previous display image (e.g. from an immediately preceding frame, or from N frames ago, where N is greater or equal to two) may be used to select one or more samples for upscaling when rendering the current display image frame. It can be assumed that use of a previous display image can provide information for locations of virtual objects and/or surface boundaries with sufficient accuracy. For example, it can be expected that positions of objects may not change (or may change very little) between one frame and the next frame and thus a previous display image may be used for providing guidance as to one or more sample portions to be targeted for upscaling.

In some cases, the ML model may select samples for upscaling in dependence on the level of detail (LOD) in one or more of the display image, depth image, and/or mesh of objects in the vicinity of the samples. For examples, samples within a threshold distance of regions of the virtual scene having a LOD above a threshold (e.g. as determined based on the display or depth image) may be selected for upscaling. This allows more efficiently allocating the upscaling processing resources to the most salient, high LOD, regions that would most benefit from an increase in fog quality.

It will be appreciated that samples may be selected for upscaling based on further parameters alternatively or in addition to those discussed above.

For example, samples may be selected for upscaling in dependence on a gaze position of a user of the display images generated at step 440. The gaze position may for example be obtained from a gaze tracker as provided as part of the HMD 120. Samples corresponding to a user's foveal region may then be selected for upscaling.

Alternatively, or in addition, samples may be selected based on user input. For example, a user input may define one or more regions in the virtual scene, and/or one or more objects in the virtual scene. Samples within a threshold distance of those regions and/or objects may then be selected for upscaling.

It will also be appreciated that the various conditions (e.g. thresholds) for selecting the samples for upscaling may be learned by the ML model, and/or predetermined e.g. empirically.

It will also be appreciated that the selection of samples for upscaling may vary between frames of the display images generated at step 440. For example, different samples may be selected for upscaling for a first frame than for one or more subsequent frames. The content depicted in the display images generated at step 440 may vary due to changes in position and/or orientation of a virtual viewpoint associated with the display image and/or movement of parts of the virtual scene (e.g. virtual objects moving within the virtual scene). Hence, the selection of samples may vary over time to allow upscaling to be targeted to different parts of the first sample set for different times. For example, display images may be sequentially generated and a sequence of display image (or depth images, or object meshes) may be retrieved for allowing sample portions targeted for upscaling to be varied with respect to time.

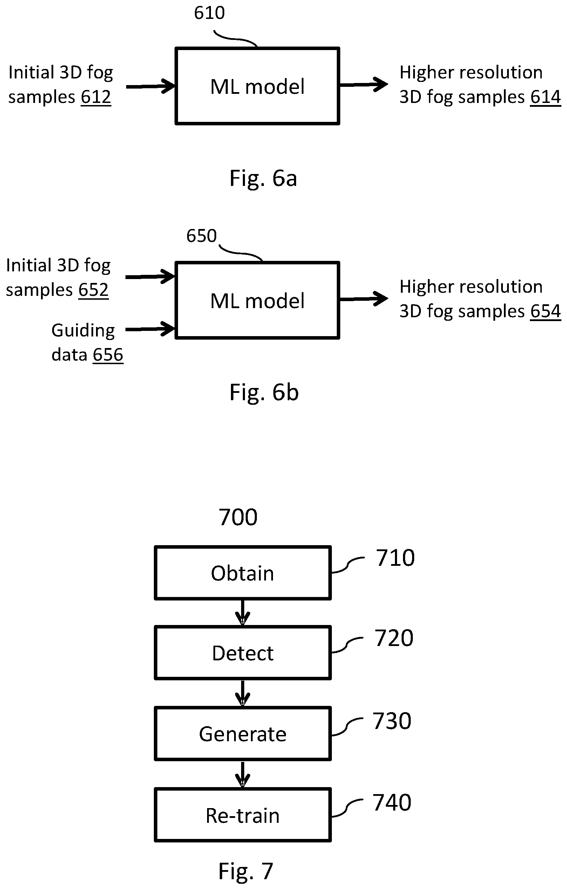

In one or more examples of the present disclosure, the volumetric effect relates to fog. Figures 6a and 6b show example methods of upscaling fog sampling results.

Referring to Figure 6a, an example method of upscaling a first set of 3D fog sampling results is shown. The ML model 610 receives initial, low resolution, fog 3D samples 612 as an input, upscales the input samples 612 and outputs higher resolution 3D fog samples 614.

Referring to Figure 6b, a further example method of upscaling a first set of 3D sampling results is shown. The ML model 650 receives initial, low resolution, fog 3D samples 652 and guiding data 656 as inputs. The ML model 650 then upscales the input samples 612, targeting one or more portions of the input samples 612 based on the guiding data 656, and the ML model 650 then outputs higher resolution 3D fog samples 654.

Referring back to Figure 4, a step 440 comprises generating one or more display images for the virtual scene at least partly in dependence on the second, upscaled, set of sampling results generated at step 430.

The second sample set has an increased sampling resolution, thus providing higher quality volumetric effects in the display images. In particular, as described herein, the upscaling is performed in the 3D sample space, thus providing improved volumetric effect quality and temporal coherence. In this way, method 400 allows sampling the computer-generated volumetric effect data using a potentially low resolution sampling calculating (for example, sampling using a 64x64x128 froxel grid), while still obtaining high quality volumetric effects in the final display images.

Generating the display images may comprise generating a 2D volumetric effect image (i.e. a 'volumetric effect map') for a virtual camera viewpoint in dependence on the second set of sampling results, and generating display images for the virtual scene in dependence on the 2D volumetric effect image. Thus, an intermediate volumetric effect image may be generated based on the upscaled samples of the volumetric effect, and a display image may be generated based on the intermediate volumetric effect image. Generating the 2D volumetric effect image may comprise projecting the second set of sampling results onto a two-dimensional image plane for a virtual camera viewpoint, thereby obtaining the 2D volumetric effect image. Generating the display images may for example comprise overlaying the 2D volumetric effect image over other elements of the virtual scene as rendered using a rendering pipeline.

The 2D volumetric effect image may be a 2D representation of the 3D upscaled sampling results obtained using the 3D grid (e.g. froxel grid). The 2D volumetric effect image may be obtained as a projection of the sampling results onto a 2D image plane for a virtual camera viewpoint (such as the virtual camera viewpoint 510 in Figure 5). For example, sample results corresponding to a same froxel for the different depth slices can be combined to obtain a respective result for a respective pixel in the 2D volumetric effect image. For example, with reference to Figure 5 sample results for each of the froxels indicated by the arrows 530 may be combined to calculate a respective result for a respective pixel in the 2D volumetric effect image. In other words, sample results for each froxel in a same column of froxels extending from the virtual camera viewpoint 510 in the depth axes can be combined to obtain a respective pixel value in the 2D volumetric effect image. For example, a weighting may be used to combine the sample results, with larger weightings being used for frustum voxels closer to the virtual viewpoint 510 and smaller weightings being used for frustum voxels further from the virtual viewpoint 510. The 2D volumetric fog effect image may comprise pixel values each indicative of colour and transparency (e.g. RGBA) for a respective pixel. The 2D volumetric effect image may then be used as an overlay image when generating the display images.

Alternatively, step 440 may comprise generating the display images directly based on the second set of sampling results, without generating an intermediate 2D volumetric effect image. For example, the second sample set may be used directly as an input to a rendering (e.g. shading) stage in the rendering pipeline, without rendering a 2D volumetric effect image.

The display images generated at step 440 may correspond to any suitable content such as a video game or other similar interactive application. The display images may be generated according to any suitable frame rate and any suitable image resolution. In some examples, display images may be generated with a frame rate of 30 Hz, 60 Hz or 120Hz or any frame rate between these possibilities. The display images may relate to 2D images suitable for being displayed by a television or other similar monitor device. Alternatively, the display images may relate to stereoscopic images for being displayed by an HMD. References herein to display images refer to any of 2D images and stereoscopic images.

Step 440 may comprise generating a plurality of display images for visually depicting a virtual scene (computer-generated environment). The virtual scene may correspond to a game world for a video game or other similar scene. In some examples, the virtual scene may correspond to a virtual reality (VR) environment which can be explored and interacted with by a user viewing the content images via a display device such as a head mountable displayed (HMD). Hence, step 440 may comprise generating display images depicting a virtual reality (VR) environment for display by an HMD. The display images may comprise pixel values which may be RGB pixel values. For example, the display images may be 24-bit RGB images such that each pixel value has 24-bits with 8-bits per colour channel. Alternatively, another colour space may be used, such as YCbCr colour space.

The display images may be generated in accordance with a virtual viewpoint position and/or orientation that may be controlled by a user. For example, a user may control a virtual viewpoint with respect to a virtual environment using one or more of a handheld controller device (e.g. 130, 130A) and/or a tracked position and/or orientation of an HMD (e.g. 120). The display images can thus be generated according to a user-controlled viewpoint. For example, the display images may have a viewpoint such as a first person viewpoint or a third person viewpoint for a virtual entity (e.g. virtual avatar or virtual vehicle) controlled by a user.

The display images may be generated according to any suitable frame rate. The volumetric effect data may be sampled at step 410 according to a frame rate that is less than or equal to a frame rate for the display images. Hence, in some examples the sampling at step 410 and upscaling at step 420 may be performed according to a first frame rate (i.e. a 1:1 correspondence for an first sample set and a higher resolution second sample set), and display images may be generated at step 440 according to a second frame rate. The first frame rate and the second frame rate may be the same (e.g. 60 Hz). Alternatively, the first frame rate may be less than the second frame rate such that a same respective higher resolution second sample set may be used for generating two or more display images.

In some cases, the image processing method 400 may further comprise simulating (i.e. generating the volumetric effect data for the virtual scene. The volumetric effect data (e.g. volumetric fog effect data) may be simulated as a temporal and spatial simulation. The simulation may be performed for a portion of a virtual scene currently within a field of view of a virtual camera. A real-time fluid dynamics simulation may be computed for simulating interaction of fluid with parts of a virtual scene. For example, any of the fluid simulations supported by the Unreal ^{®} game engine or Unity^{®} game engine may be used. The simulated volumetric effect data may then be sampled at step 410 as described herein.

In some cases, the image processing method 400 may further comprise outputting the display images generated at step 440 to a display device.

In one or more examples, the ML model used for upscaling the sampling results at steps 420-430 may be adaptive based on the virtual scene.

In these examples, the method 400 may comprise modifying one or more parameters of the ML model (i.e. refining the ML model) in dependence on one or more properties of the virtual scene. This allows further improving the quality of the fog effects by ensuring that the ML model used for upscaling is appropriate for the virtual scene to which it is applied.

Modifying one or more parameters of the ML model may comprise modifying one or more weights of the ML model, e.g. modifying their values, or adding or removing weights (for instance, by adding or removing layers from a neural network ML model).

Modifying the parameters may comprise selecting one of a plurality of candidate ML models. For example, each candidate ML model may be trained for upscaling volumetric effect sampling results for different types of virtual scenes, and the current ML model may be replaced with another ML model that is better suited to the present virtual scene.

Each of the candidate ML models may have the same architecture such that modifying weights only requires the updating of one or more weights of the current ML models. This allows more efficiently updating the ML model for upscaling as a new ML model need not be loaded into memory. The candidate ML models may comprise a base ML model trained for a wide range of virtual scenes. Further candidate ML models may be obtained by re-training the base ML model for specific types of virtual scenes. In this way, modifying the ML model parameters for one of those specific types of virtual scene may simply comprise obtaining updated values for one or more weights as determined during the re-training. Thus, the ML model may be modified in a more efficient manner.

Modified parameters for the ML model may be retrieved from a remote (e.g. cloud) server. For reduced communication bandwidth, the modified parameters may be transmitted from the remote server as differences (i.e. deltas) with respect to the current ML model parameters.

Alternatively, the candidate ML models may have different architectures such that modifying weights comprises replacing one ML model with another ML model.

The one or more properties of the virtual scene may be used to determine what modifications to the ML model are appropriate for the virtual scene. Example virtual scene properties that may be considered include one or more of: geometry of the virtual scene (e.g. the objects in the scene, and the objects' properties and relative arrangement), textures in the virtual scene (e.g. the textures of objects in the virtual scene), and/or lighting in the virtual scene (e.g. the number, colour, and type of light sources in the virtual scene; or whether the virtual scene is in a day or night cycle).

Modifying the ML model parameters may be based on a predetermined mapping between virtual scene properties and ML model parameters. The predetermined mapping may be empirically determined or learned by a further ML model. The predetermined mapping may for example be used to select one of a plurality of candidate ML models for upscaling based on properties of the current virtual scene.

For instance, one of a plurality of candidate ML models may be selected in dependence on: whether the light sources in the virtual scene comprise the Sun or the Moon, whether there are water-body objects in the virtual scene (e.g. a lake), or the size and reflectiveness of objects in the virtual scene (e.g. whether there are glass skyscrapers in the virtual scene). For example, a candidate ML model may be selected using a decision tree comprising a plurality of nodes each relating to different properties of the virtual scene (e.g. "Is it daylight → YES/NO", or "Is there a lake → YES/NO", etc.).

In some cases, for improved responsiveness, one or more properties of a future virtual scene may be predicted in order to pre-emptively obtain modified parameters for the ML model for use in rendering the future virtual scene based on the predicted virtual scene properties. This allows reducing latency and increasing the processing speed of upscaling the sampling results, as a modified ML model, tailored to a particular virtual scene, can be obtained prior to a user arriving at that virtual scene.

The modified ML model parameters for the future virtual scene may be obtained in the same way as described above, e.g. based on a predetermined mapping between scene properties and ML model parameters.

The properties of a future virtual scene may be predicted in dependence on one or more actions of a user in the virtual scene. For example, user actions may be extrapolated to identify a future virtual scene and its properties. For instance, based on the user moving towards an object (e.g. cave) within the virtual environment, ML model parameters corresponding to virtual scenes relating to the object (e.g. a virtual scene inside the caves may be obtained. In this way, virtual scene shifts can be predicted further in advance than a user arriving at a new virtual scene. This provides more accurate and quicker adaptation of the upscaling ML model for virtual scene changes. Further, this allows improving the quality of the volumetric effects by ensuring that an appropriate ML model is available for upscaling the sampling results when the user arrives at a virtual scene.

Alternatively, or in addition, user actions in the virtual scene may be compared to actions of one or more previous users in the virtual scene in order to identify clusters of users with similar action patterns (e.g. similar playing styles in a videogame). The previous users' next actions may then be used to predict the current user's next action and the new virtual scene. The clustering may be performed using a clustering machine learning model.

Referring to Figure 7, an example method 700 for generating modified ML model parameters for different virtual scene properties is shown. ML model parameters obtained using method 700 may then be used to modify parameters of the ML model used at steps 420-430 of method 400 as described herein. Method 700 allows efficiently determining the requisite ML model modifications for improving the quality of volumetric effects for a wide range of virtual scenes.

A step 710 comprises obtaining an initial ML model for upscaling sampling results. The initial ML model may be a general upscaling ML model trained on data for a wide range of virtual scenes. Alternatively, the initial ML model may be a ML model used for a previous virtual scene, which may be tailored to the type of virtual scene (e.g. scenes with moonlight) of the previous virtual scene.

A step 720 comprises detecting an artefact relating to the volumetric effect in display images generated (e.g. at step 440 of method 400) using the initial ML model for a given virtual scene. Artefacts relating to the volumetric effect in display images for a given virtual scene may be detected using appropriate image processing techniques, such as edge detection or frequency analysis. Alternatively, or in addition, the artefacts may be detected using a further ML model trained to detect volumetric effect artefacts in images. The further ML model may for example be trained using pairs of images comprising volumetric effects and user-assigned flags indicating whether an artefact is present in the images. In this way, the further ML model may learn to identify features causing artefacts in images.

A step 730 comprises generating training data for re-training the initial ML model for the given virtual scene. The training data may comprise pairs of lower and higher resolution sampling results, which may for example be obtained using the techniques described herein in relation to obtaining training data for the ML model used at step 420 of method 400. The lower resolution sampling results may be obtained by sampling a plurality of volumetric effect simulations for the given virtual scene (e.g. a plurality of different fogs). In some cases, to prevent overfitting, training data may be obtained for a plurality of virtual scenes having similar properties (e.g. a plurality of scenes with similar light sources, e.g. with a light source corresponding to the Sun at midday).

A step 740 comprises re-training the initial ML model using the training data generated at step 730 to obtain one or more updated parameters for the initial ML model for future use with the given virtual scene and/or other virtual scenes having similar properties (e.g. for virtual scenes comprising lakes and moonlight). The updated parameters may be stored in a database and associated with one or more properties of the given virtual scene.

In some cases, method 700 may be applied in real-time to adapt the ML model of method 400 before it is used at steps 420-430. It will be appreciated that when interacting with a virtual environment, a user will typically remain in a given virtual scene (e.g. a room) for multiple frames. Thus, by detecting an artefact in one of the initial frames, the ML model may be re-trained in real-time (e.g. using cloud resources) and updated for a later frame for the same virtual scene. This approach therefore allows counteracting such artefacts in near real-time and further improving the quality of the volumetric effects in the generated display images. When applied in real-time at steps 420-430 of method 400, method 700 may comprise: detecting an artefact relating to the volumetric effect in the display images generated at step 440, generating training data for the ML model for the (current) virtual scene, and re-training the ML model using the generated training data to obtain one or more updated parameters for the machine learning model. The updated parameters may then be used to modify parameters of the ML model, such that it can provide higher quality upscaling of the first set of sampling results. The generating of training data and re-training of the ML model may be performed at a remote (e.g. cloud server) for improved processing speed. In this way, 'live' re-training of the ML model for different virtual scenes may be performed on the remote server.

Referring back to Figure 4, in a summary embodiment of the present invention an image processing method 400 for generating images including a volumetric effect comprises the following steps.

A step 410 comprises sampling, using a 3D grid, computer-generated volumetric effect data for a virtual scene at a first sampling resolution, to obtain a first set of 3D sampling results, as described elsewhere herein.

A step 420 comprises inputting the first set of 3D sampling results to a machine learning model trained to upscale at least part of input 3D sampling results, to increase their sampling resolution, as described elsewhere herein.

A step 430 comprises upscaling, by the machine learning model, at least part of the first set of 3D sampling results, to obtain a second set of 3D sampling results having a second, higher, sampling resolution, as described elsewhere herein.

A step 440 comprises generating one or more display images for the virtual scene at least partly in dependence on the second set of 3D sampling results, as described elsewhere herein.

It will be apparent to a person skilled in the art that variations in the above method corresponding to operation of the various embodiments of the method and/or apparatus as described and claimed herein are considered within the scope of the present disclosure, including but not limited to that:
- sampling the computer-generated volumetric effect data at step 410 comprises sampling using a frustrum voxel grid, as described elsewhere herein;
   - in this case, optionally the frustrum voxel grid comprises frustrum voxels aligned with a virtual camera viewpoint, as described elsewhere herein;
- inputting the first set of sampling results to the machine learning model comprises transposing depth and channel dimensions of the first set of sampling results, as described elsewhere herein;
   - in this case, optionally transposing the first set of sampling results comprises transposing the first set of sampling results such that, for a given sample height and width, samples in a depth direction are input to the machine learning model as channels of an input matrix, as described elsewhere herein;
   - in this case, optionally inputting the first set of sampling results to the machine learning model comprises inputting a plurality of samples of the first set of sampling results at a first width and a first height but having a plurality of different depths as a single sample with channels corresponding to each of the different depths, as described elsewhere herein;
   - in this case, optionally each sample of the first set of sampling results comprises a plurality of channels; and wherein inputting the first set of sampling results to the machine learning model comprises flattening the first set of sampling results such that width, height, and channel dimensions are unravelled into two dimensions, as described elsewhere herein;
- the method further comprising modifying one or more parameters of the machine learning model for performing the upscaling of the first set of sampling results in dependence on one or more properties of the virtual scene, as described elsewhere herein;
   - in this case, optionally the one or more properties of the virtual scene comprise one or more selected from the list consisting of: one or more lighting properties, one or more geometry properties, one or more and texture properties, as described elsewhere herein;
   - in this case, optionally the method further comprises: predicting one or more properties of a future virtual scene in dependence on one or more actions of a user in the virtual scene; and obtaining one or more modified parameters for the machine learning model based on the predicted properties, for use in upscaling sampled computer-generated volumetric effect data for the future virtual scene, as described elsewhere herein;
   - in this case, optionally the method further comprises: detecting an artefact relating to the volumetric effect in the display images for the virtual scene; generating training data for the machine learning model for the virtual scene; and re-training the machine learning model using the generated training data to obtain one or more updated parameters for the machine learning model, as described elsewhere herein;
      ▪ where, optionally, modifying the one or more parameters of the machine learning model comprises using the one or more updated parameters for the machine learning model, as described elsewhere herein;
      ▪ where, optionally, one or more of the steps (e.g. the generating of training data and/or re-training) are performed at a remote server, as described elsewhere herein;
   - in this case, optionally the method comprises receiving the one or more modified parameters from a remote (e.g. cloud) server, as described elsewhere herein;
- upscaling the at least part of the first set of sampling results comprises targeting (i.e. selecting), by the machine learning model, a subset of the first set of sampling results for the at least part of the first set of sampling results for upscaling, as described elsewhere herein;
   - in this case, optionally targeting the subset of the first set of sampling results comprises selecting a sample from the first set of sampling results for upscaling in dependence on one or more from the list consisting of: a position of the sample relative to the volumetric effect (e.g. a distance between a sample and an edge of the volumetric effect, where the distance may be a distance in the 3D grid space); a position of the sample relative to a virtual camera viewpoint (e.g. a distance between the sample and the virtual camera viewpoint); a value of one or more samples between the virtual camera viewpoint and the sample; a position of the sample relative to one or more virtual objects in the virtual scene; and a level of detail, in a previous display image of the virtual scene, in a vicinity (e.g. within a threshold distance) of the sample, as described elsewhere herein;
   - in this case, optionally samples are selected in dependence on one or more from the list consisting of: a position of a sample in the 3D sampling grid; a value of a sample, values of one or more neighbouring samples, and values of one or more intervening samples, as described elsewhere herein;
   - in this case, optionally the targeting of the subset of the first set of sampling results is performed in dependence on guiding data comprising one or more from the list consisting of: a previous display image of the virtual scene; a depth image of the virtual scene; a mesh of one or more virtual objects in the virtual scene; and game state data, as described elsewhere herein;
- upscaling the at least part of the first set of sampling results comprises upscaling a first part of the first set of sampling results using a first machine learning model and upscaling a second part of the first set of sampling results using a second machine learning model, as described elsewhere herein;
- the machine learning model is trained with training data comprising pairs of lower resolution and higher resolution sets of 3D sampling results of a computer-generated volumetric effect, as described elsewhere herein;
- the machine learning model is trained by evaluating an upscaled set of sampling results for a volumetric effect output by the machine learning model against a ground truth set of sampling results for the volumetric effect, as described elsewhere herein;
   - in this case, optionally evaluating the upscaled set of sampling results against the ground truth set of sampling results comprises determining a perceptual loss in the 3D sampling space; where the perceptual loss is determined using a further machine learning model trained using pairs of 3D volumetric effect sampling results and operator-assigned quality scores for display images generated using the 3D volumetric effect sampling results, as described elsewhere herein;
- the machine learning model is trained by evaluating a display image generated using an upscaled set of sampling results for a volumetric effect output by the machine learning model against a display image generated using a ground truth set of sampling results for the volumetric effect, as described elsewhere herein;
   - in this case, optionally evaluating the upscaled set of sampling results against the ground truth set of sampling results comprises determining a perceptual loss in the image space, as described elsewhere herein;
      ▪ where, optionally, the perceptual loss is determined using LPIPS and/or VGG, as described elsewhere herein;
- the machine learning model comprises one or more from the list consisting of: a recurrent neural network (RNN), and an attention enhanced super-resolution GAN model (A-ESRGAN) , as described elsewhere herein;
- inputting the at least part of the first set of sampling results to the ML model comprises dividing, along a first direction, the at least part of the first set of sampling results into a plurality of slices, and inputting each slice for upscaling by the ML model, as described elsewhere herein;
   - in this case, optionally the first direction is a depth direction, and each slice is a depth slice, as described elsewhere herein;
- generating one or more display images at step 430 comprises: generating a two-dimensional volumetric effect image for a virtual camera viewpoint at least partly in dependence on the second set of sampling results; and generating one or more display images for the virtual scene at least partly in dependence on the 2D volumetric effect image, as described elsewhere herein;
   - in this case, optionally generating the two-dimensional volumetric effect image comprise projecting the second set of sampling results onto a two-dimensional image plane for a virtual camera viewpoint, to obtain a 2D volumetric effect image (i.e. a volumetric effect (e.g. fog) map), as described elsewhere herein;
- the computer-generated volumetric effect data comprises one or more from the list consisting of: volumetric fog effect data; volumetric smoke effect data; volumetric water effect data; volumetric fire effect data; and volumetric mobile particles (e.g. sand, or avalanches, etc.) effect data, as described elsewhere herein;
- the three-dimensional grid comprises a voxel grid, as described elsewhere herein;
- the three-dimensional grid comprises a froxel grid, as described elsewhere herein;
- the at least part of the first set of sampling results comprises all of the first set of sampling results, as described elsewhere herein;
- the method further comprises simulating the volumetric effect to obtain the computer-generated volumetric effect data, as described elsewhere herein;
- upscaling the at least part of the first set of sampling results comprises using a first machine learning model for a first portion of the at least part of the first set of sampling results, and a second machine learning model for a second portion of the at least part of the first set of sampling results, as described elsewhere herein;
- the method further comprises outputting the generated display images to a display device, as described elsewhere herein;
- the method is computer-implemented, as described elsewhere herein; and
- the virtual scene is a virtual scene for a videogame, as described elsewhere herein.

In another summary embodiment of the present invention, a method of training a machine learning model for use in image processing comprises the following steps. A step of receiving training data comprising lower and higher resolution sets of 3D sampling results of a computer-generated volumetric effect, as described elsewhere herein. And a step of inputting the training data to a machine learning model to train the machine learning model to upscale at least part of input 3D sampling results of computer-generated volumetric effect, as described elsewhere herein.

The machine learning model trained according to this method may be for use in the image processing method as described elsewhere herein. The machine learning model may be trained using supervised learning.

In another summary embodiment of the present invention, a trained machine learning model for use in image processing comprises one or more learned parameters for upscaling at least part of input 3D sampling results of computer-generated volumetric effect, as described elsewhere herein.

The machine learning model may be trained as described elsewhere herein. The machine learning model may be for use in the image processing method as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Referring back to Figure 3, in a summary embodiment of the present invention, an image processing system 300 for generating images including a volumetric effect may comprise the following:
A sampling processor 310 configured (for example by suitable software instruction) to sample, using a 3D grid, computer-generated volumetric effect data for a virtual scene at a first sampling resolution, to obtain a first set of 3D sampling results, as described elsewhere herein. A machine learning model 320 trained to upscale at least part of input 3D sampling results. The machine learning model being configured (for example by suitable software instruction) to receive the first set of 3D sampling results as an input; and upscale at least part of the first set of sampling results, to obtain a second set of 3D sampling results having a second, higher, sampling resolution, as described elsewhere herein. An image generating processor 330 configured (for example by suitable software instruction) to generate one or more display images for the virtual scene at least partly in dependence on the second set of 3D sampling results, as described elsewhere herein.

It will be appreciated that the above system 300, operating under suitable software instruction, may implement the methods and techniques described herein.

Of course, the functionality of these processors may be realised by any suitable number of processors located at any suitable number of devices and any suitable number of devices as appropriate rather than requiring a one-to-one mapping between the functionality and a device or processor.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

### EMBODIMENTS

Although the present invention is defined in the claims, it should be understood that the present invention can also (alternatively) be defined in accordance with the following embodiments:
1. An image processing method for generating images including a volumetric effect, the method comprising:
   sampling, using a 3D grid, computer-generated volumetric effect data for a virtual scene at a first sampling resolution, to obtain a first set of 3D sampling results;
   inputting the first set of 3D sampling results to a machine learning model trained to upscale at least part of input 3D sampling results;
   upscaling, by the machine learning model, at least part of the first set of 3D sampling results, to obtain a second set of 3D sampling results having a second, higher, sampling resolution; and
   generating one or more display images for the virtual scene at least partly in dependence on the second set of 3D sampling results.
2. The image processing method of embodiment 1, wherein sampling the computer-generated volumetric effect data comprises sampling using a frustrum voxel grid.
3. The image processing method of embodiment 1 or 2, wherein inputting the first set of sampling results to the machine learning model comprises transposing depth and channel dimensions of the first set of sampling results.
4. The image processing method of embodiment 3, wherein each sample of the first set of sampling results comprises a plurality of channels; and wherein inputting the first set of sampling results to the machine learning model comprises flattening the first set of sampling results such that width, height, and channel dimensions are unravelled into two dimensions.
5. The image processing method of any preceding embodiment, further comprising modifying one or more parameters of the machine learning model for performing the upscaling of the first set of sampling results in dependence on one or more properties of the virtual scene.
6. The image processing method of embodiment 5, further comprising:
   predicting one or more properties of a future virtual scene in dependence on one or more actions of a user in the virtual scene; and
   obtaining one or more modified parameters for the machine learning model based on the predicted properties, for use in upscaling sampled computer-generated volumetric effect data for the future virtual scene.
7. The image processing method of embodiment 5 or 6, further comprising:
   detecting an artefact relating to the volumetric effect in the display images for the virtual scene;
   generating training data for the machine learning model for the virtual scene; and
   re-training the machine learning model using the generated training data to obtain one or more updated parameters for the machine learning model;
   wherein modifying the one or more parameters of the machine learning model comprises using the one or more updated parameters for the machine learning model.
8. The image processing method of any preceding embodiment, wherein upscaling the at least part of the first set of sampling results comprises targeting, by the machine learning model, a subset of the first set of sampling results for the at least part of the first set of sampling results for upscaling.
9. The image processing method of embodiment 8, wherein targeting the subset of the first set of sampling results comprises selecting a sample from the first set of sampling results for upscaling in dependence on one or more from the list consisting of:
   a. a position of the sample relative to the volumetric effect;
   b. a position of the sample relative to a virtual camera viewpoint;
   c. a value of one or more samples between the virtual camera viewpoint and the sample;
   d. a position of the sample relative to one or more virtual objects in the virtual scene; and
   e. a level of detail, in a previous display image of the virtual scene, in a vicinity of the sample.
10. The image processing method of embodiment 8 or 9, wherein the targeting of the subset of the first set of sampling results is performed in dependence on guiding data comprising one or more from the list consisting of:
   a. a previous display image of the virtual scene;
   b. a depth image of the virtual scene;
   c. a mesh of one or more virtual objects in the virtual scene; and
   d. game state data.
11. The image processing method of any preceding embodiment, wherein the machine learning model is trained by evaluating an upscaled set of sampling results for a volumetric effect output by the machine learning model against a ground truth set of sampling results for the volumetric effect.
12. The image processing method of embodiment 11, wherein evaluating the upscaled set of sampling results against the ground truth set of sampling results comprises determining a perceptual loss in the 3D sampling space; wherein the perceptual loss is determined using a further machine learning model trained using pairs of 3D volumetric effect sampling results and operator-assigned quality scores for display images generated using the 3D volumetric effect sampling results.
13. The image processing method of any of embodiments 1 to 10, wherein the machine learning model is trained by evaluating a display image generated using an upscaled set of sampling results for a volumetric effect output by the machine learning model against a display image generated using a ground truth set of sampling results for the volumetric effect.
14. The image processing method of any preceding embodiment, wherein generating one or more display images comprises:
   generating a two-dimensional volumetric effect image for a virtual camera viewpoint at least partly in dependence on the second set of sampling results; and
   generating one or more display images for the virtual scene at least partly in dependence on the 2D volumetric effect image.
15. The image processing method of any preceding embodiment, wherein the computer-generated volumetric effect data comprises one or more from the list consisting of:
   volumetric fog effect data;
   volumetric smoke effect data;
   volumetric water effect data;
   volumetric fire effect data; and
   volumetric mobile particles effect data.
16. A computer program comprising computer executable instructions adapted to cause a computer system to perform the method of any one of the preceding embodiments.
17. An image processing system for generating images including a volumetric effect, the system comprising:
   a sampling processor configured to sample, using a 3D grid, computer-generated volumetric effect data for a virtual scene at a first sampling resolution, to obtain a first set of 3D sampling results;
   a machine learning model trained to upscale at least part of input 3D sampling results, the machine learning model being configured to:
      receive the first set of 3D sampling results as an input; and
      upscale at least part of the first set of sampling results, to obtain a second set of 3D sampling results having a second, higher, sampling resolution; and
   an image generating processor configured to generate one or more display images for the virtual scene at least partly in dependence on the second set of 3D sampling results.

## Claims

1. An image processing method for generating images including a volumetric effect, the method comprising:
sampling (410), using a 3D grid, computer-generated volumetric effect data for a virtual scene at a first sampling resolution, to obtain a first set of 3D sampling results;
inputting (420) the first set of 3D sampling results to a machine learning model (320) trained to upscale at least part of input 3D sampling results;
upscaling (430), by the machine learning model (320), at least part of the first set of 3D sampling results, to obtain a second set of 3D sampling results having a second, higher, sampling resolution; and
generating (440) one or more display images for the virtual scene at least partly in dependence on the second set of 3D sampling results.

2. The image processing method of claim 1, wherein sampling the computer-generated volumetric effect data comprises sampling using a frustrum voxel grid.

3. The image processing method of claim 1 or 2, wherein inputting the first set of sampling results to the machine learning model (320) comprises transposing depth and channel dimensions of the first set of sampling results, optionally wherein each sample of the first set of sampling results comprises a plurality of channels; and wherein inputting the first set of sampling results to the machine learning model (320) comprises flattening the first set of sampling results such that width, height, and channel dimensions are unravelled into two dimensions.

4. The image processing method of any preceding claim, further comprising modifying one or more parameters of the machine learning model (320) for performing the upscaling of the first set of sampling results in dependence on one or more properties of the virtual scene.

5. The image processing method of claim 4, further comprising:
predicting one or more properties of a future virtual scene in dependence on one or more actions of a user in the virtual scene; and
obtaining one or more modified parameters for the machine learning model (320) based on the predicted properties, for use in upscaling sampled computer-generated volumetric effect data for the future virtual scene.

6. The image processing method of claim 4 or 5, further comprising:
detecting (720) an artefact relating to the volumetric effect in the display images for the virtual scene;
generating (730) training data for the machine learning model (320) for the virtual scene; and
re-training (740) the machine learning model (320) using the generated training data to obtain one or more updated parameters for the machine learning model (320);
wherein modifying the one or more parameters of the machine learning model (320) comprises using the one or more updated parameters for the machine learning model (320).

7. The image processing method of any preceding claim, wherein upscaling the at least part of the first set of sampling results comprises targeting, by the machine learning model (320), a subset of the first set of sampling results for the at least part of the first set of sampling results for upscaling.

8. The image processing method of claim 7, wherein targeting the subset of the first set of sampling results comprises selecting a sample from the first set of sampling results for upscaling in dependence on one or more from the list consisting of:
a. a position of the sample relative to the volumetric effect;
b. a position of the sample relative to a virtual camera viewpoint;
c. a value of one or more samples between the virtual camera viewpoint and the sample;
d. a position of the sample relative to one or more virtual objects in the virtual scene; and
e. a level of detail, in a previous display image of the virtual scene, in a vicinity of the sample.

9. The image processing method of claim 7 or 8, wherein the targeting of the subset of the first set of sampling results is performed in dependence on guiding data comprising one or more from the list consisting of:
a. a previous display image of the virtual scene;
b. a depth image of the virtual scene;
c. a mesh of one or more virtual objects in the virtual scene; and
d. game state data.

10. The image processing method of any preceding claim, wherein the machine learning model (320) is trained by evaluating an upscaled set of sampling results for a volumetric effect output by the machine learning model (320) against a ground truth set of sampling results for the volumetric effect, optionally wherein evaluating the upscaled set of sampling results against the ground truth set of sampling results comprises determining a perceptual loss in the 3D sampling space; wherein the perceptual loss is determined using a further machine learning model (320) trained using pairs of 3D volumetric effect sampling results and operator-assigned quality scores for display images generated using the 3D volumetric effect sampling results.

11. The image processing method of any of claims 1 to 9, wherein the machine learning model (320) is trained by evaluating a display image generated using an upscaled set of sampling results for a volumetric effect output by the machine learning model (320) against a display image generated using a ground truth set of sampling results for the volumetric effect.

12. The image processing method of any preceding claim, wherein generating one or more display images comprises:
generating a two-dimensional volumetric effect image for a virtual camera viewpoint at least partly in dependence on the second set of sampling results; and
generating one or more display images for the virtual scene at least partly in dependence on the 2D volumetric effect image.

13. The image processing method of any preceding claim, wherein the computer-generated volumetric effect data comprises one or more from the list consisting of:
volumetric fog effect data;
volumetric smoke effect data;
volumetric water effect data;
volumetric fire effect data; and
volumetric mobile particles effect data.

14. A computer program comprising computer executable instructions adapted to cause a computer system to perform the method of any one of the preceding claims.

15. An image processing system (300) for generating images including a volumetric effect, the system configured to perform the method of any one of claims 1 to 13.
